# EUROPÄISCHE PATENTANMELDUNG

(11) **EP 3 088 748 A1**
(43) Veröffentlichungstag der Anmeldung: **02.11.2016**
(21) Anmeldenummer: 16167625.9
(22) Anmeldetag: 29.04.2016
(51) Int. Cl.: F04D 29/70, B01D 35/30

(54) **SCHMUTZFÄNGER FÜR FÖRDERPUMPE MIT BELEUCHTBARER FILTEREINHEIT**

(30) Priorität: 29.04.2015 DE 202015003085 U
(71) Anmelder: Speck Pumpen Verkaufsgesellchaft GmbH, 91233 Neunkirchen a. Sand (DE)
(72) Erfinder: Herger, Armin, 91224 Pommelsbrunn (DE)
(74) Vertreter: Reitstötter Kinzebach

(57) **Zusammenfassung**

Die Erfindung betrifft einen Schmutzfänger für eine Förderpumpe und eine mit einem solchen Schmutzfänger versehene Förderpumpe, wobei eine Filtereinheit in einem wenigstens teilweise transparenten Gehäuse mit jeweils mindestens einer Einlass- und Auslassöffnung angeordnet ist und die Auslassöffnung mit der Ansaugöffnung der Förderpumpe verbindbar ist. Erfindungsgemäß weist der der Schmutzfänger wenigstens eine Beleuchtungseinrichtung auf, die so angeordnet ist, dass die Filtereinheit beleuchtbar ist. Vorzugsweise hat das Gehäuse einen wenigstens teilweise transparenten Deckel und zumindest ein Beleuchtungselement der Beleuchtungseinrichtung ist am Deckel angeordnet.

## Beschreibung

Die Erfindung betrifft einen Schmutzfänger für eine Förderpumpe, wobei eine Filtereinheit in einem wenigstens teilweise transparenten Gehäuse mit jeweils mindestens einer Einlass- und Auslassöffnung angeordnet ist und die Auslassöffnung mit der Ansaugöffnung der Förderpumpe verbindbar ist. Ferner betrifft die Erfindung eine Förderpumpe, insbesondere eine Umwälzpumpe für Swimmingpools oder Schwimmbäder.

Es ist bekannt, dass zum störungsfreien Betrieb einer Förderpumpe Schmutzpartikel von der Ansaugvorrichtung der Pumpe ferngehalten werden müssen, um ein Verstopfen zu vermeiden. Zu diesem Zweck weist die in DE1935853U beschriebene Ansaugvorrichtung eine in die Saugleitung eingebaute Filterkammer auf, in der ein Schmutzfänger angebracht ist. Dieser hat die Form eines Korbs, der zur Reinigung durch eine mit einem Deckel verschlossene Öffnung entnommen werden kann.

Um den Verschmutzungsgrad des Filterkorbs einfach feststellen zu können, wird der Deckel der Filterkammer typischerweise transparent ausgeführt, sodass der Schmutzfänger visuell kontrolliert werden kann. Dennoch ist diese visuelle Inspektion häufig für den Benutzer umständlich, da derartige Förderpumpen (etwa Umwälzpumpen in Schwimmbädern) häufig an schwer zugänglichen und schlecht beleuchteten Orten aufgestellt sind.

Schmutzfänger für Förderpumpen, die mit einem transparenten Deckel zur Inspektion des Schmutzfängers ausgerüstet ist sind außerdem aus dem US-Patent US 3,685,919 oder der deutschen Patentanmeldung DE 10 2006 023 379 bekannt.

Es sind auch Pumpen mit Lichtquellen bekannt.

So beschreibt das US-Patent US 4,363,727 eine Pumpe mit einem Abscheider, in dem eine Lichtquelle und ein Sensor angeordnet sind, um nach Art einer Fotozelle die Position eines beweglichen Schwimmers zu detektieren.

In der US-Patentanmeldung US 2012/0171051 A1 wird eine Lenzpumpe beschrieben, die eine Filterkammer aufweist, an deren Innenwand eine blaue Leuchtdiode angebracht ist, die bei eingeschalteter Pumpe leuchtet, damit der Benutzer über einen transparenten Deckel feststellen kann, ob die Pumpe in Betrieb ist.

Der vorliegenden Erfindung liegt das technische Problem zugrunde, Nachteile bestehender Systeme zu beheben und insbesondere einen Schmutzfänger bereitzustellen, der unabhängig vom Betriebszustand der Pumpe optisch leicht kontrolliert werden kann.

Dieses technische Problem Aufgabe wird durch einen Schmutzfänger mit den Merkmalen des Patentanspruchs 1 gelöst. Vorteilhafte Weiterbildungen sind Gegenstand der abhängigen Patentansprüche.

Der erfindungsgemäße Schmutzfänger weist wenigstens eine Beleuchtungseinrichtung auf, die so angeordnet ist, dass die Filtereinheit beleuchtbar ist. Auf diese Weise kann der Benutzer den Filter unabhängig von den äußeren Lichtverhältnissen visuell inspizieren, ohne beispielsweise eine externe Lampe zur Hilfe zu nehmen.

In einer Ausgestaltung der Erfindung weist das Gehäuse einen wenigstens teilweise transparenten Deckel auf, durch den der Filter betrachtet werden kann. Ferner sind weitere Ausführungen denkbar, bei denen der Filter beispielsweise durch ein seitlich angeordnetes Sichtfenster von außen sichtbar ist. In weiteren vorteilhaften Ausgestaltungen ist zumindest ein Beleuchtungselement der Beleuchtungseinrichtung am Deckel und/oder an einer Seitenwand des Gehäuses angeordnet. Die Anordnung der Beleuchtungseinrichtung kann an die Gegebenheiten in der Filterkammer, etwa die Form des Filters, angepasst werden, um eine optimale Ausleuchtung zu erzielen. Ferner ist es vorteilhaft, wenn die Filtereinheit aus dem Gehäuse des Schmutzfängers herausnehmbar ist, um das Reinigen zu erleichtern.

Die Beleuchtungseinheit kann in verschiedenen Ausgestaltungen auf unterschiedliche Weisen mit Energie versorgt werden. Beispielsweise erlaubt eine eigene Batterie die Unterbringung der Beleuchtungseinheit im Deckel der Filterkammer, ohne dass eine elektrische Verbindung zu einer anderen Stromquelle vorgesehen werden muss.

Andererseits muss die Batterie in bestimmten Abständen gewechselt werden. Wird die Beleuchtungseinheit dagegen durch die Energieversorgungseinheit der Förderpumpe gespeist, so entfällt diese zusätzliche Wartungsarbeit.

Bei einer Ausgestaltung der Erfindung ist die Beleuchtungseinrichtung vom Benutzer steuerbar, insbesondere kann die Steuerung durch einen Druckknopf realisiert werden. Auf diese Weise wird sichergestellt, dass die Beleuchtungseinheit nur elektrische Energie verbraucht, wenn sie benötigt wird, was die Lebensdauer der Beleuchtungseinheit und gegebenenfalls der Batterie verlängert. Der Druckknopf kann als Umschalter ausgebildet sein, d.h. die Beleuchtungseinrichtung wird durch einmaliges Betätigen des Druckknopfes eingeschaltet und durch ein weiteres Betätigen wieder ausgeschaltet. Bevorzugt ist die Beleuchtungseinrichtung jedoch nur dann in Betrieb, solange der Druckknopf betätigt wird. Dadurch wird zuverlässig verhindert, dass die Beleuchtungseinrichtung länger als notwendig in Betrieb ist, was insbesondere für einen Batteriebetrieb vorteilhaft ist.

Gemäß einer weiteren bevorzugten Ausführungsform ist über dem Druckknopf eine zusätzliche Abdichtung, beispielsweise in Form einer Gummikappe, vorgesehen.

Die erfindungsgemäße Förderpumpe, insbesondere eine Umwälzpumpe für Swimmingpools oder Schwimmbäder, umfasst einen erfindungsgemäßen Schmutzfänger, wobei die Auslassöffnung des Schmutzfängers mit der Ansaugöffnung der Förderpumpe verbunden ist. Die Verbindung kann beispielsweise durch einen Schlauch erfolgen, aber die Auslassöffnung des Schmutzfängers kann auch unmittelbar an der Ansaugöffnung der Förderpumpe angeordnet sein. Auf diese Weise könnten beispielsweise verschiedene Typen von Schmutzfängern an dieselbe Pumpe anschließbar sein, was die Flexibilität der Anwendung erhöht.

In einer vorteilhaften Ausführung ist der erfindungsgemäße Schmutzfänger in das Gehäuse der Förderpumpe integriert, sodass eine stabile Verbindung zwischen der Ansaugvorrichtung und dem Schmutzfänger besteht.

Die Erfindung wird nun anhand eines Ausführungsbeispiels mit Bezug zu den Zeichnungen erläutert. Dabei zeigen:
- Figur 1: eine beispielhafte Ausführungsform einer herkömmlichen Förderpumpe mit integriertem Schmutzfänger,
- Figur 2: eine erfindungsgemäße Ausführungsform eines Deckels für den Schmutzfänger der Figur 1; und
- Figur 3: den Deckel der Figur 2 mit eingebautem Beleuchtungseinsatz.

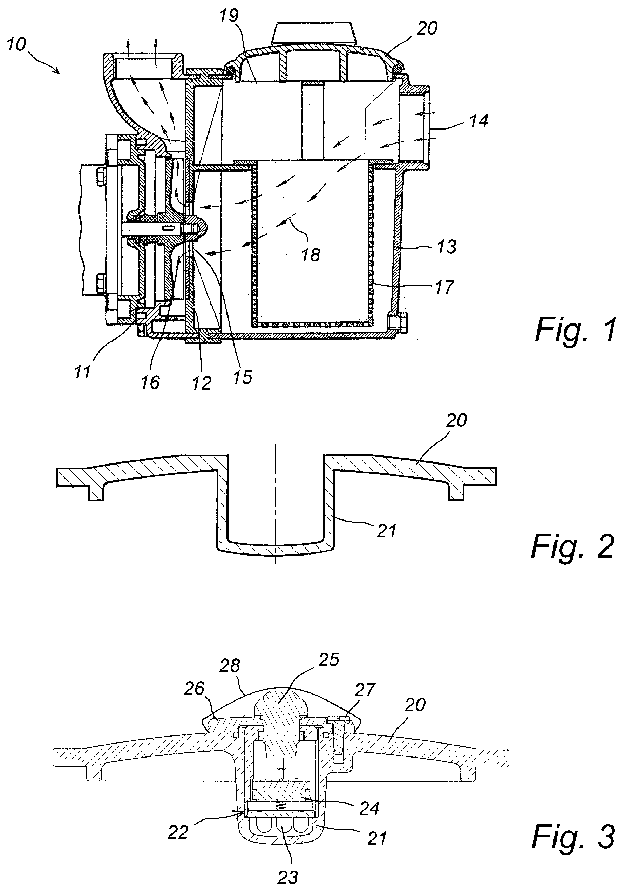

Die in Figur 1 schematisch dargestellte Förderpumpe 10 weist ein Pumpengehäuse 11 auf, das über eine Trennwand 12 mit einem Schmutzfänger 13 verbunden ist. Der Schmutzfänger weist einen Ansaugstutzen 14 auf, der über eine Auslassöffnung 15 in der Trennwand 12 mit einer Saugöffnung 16 der Förderpumpe 10 verbunden ist. In dem Schmutzfänger 13 ist eine Filtereinheit angeordnet, die im dargestellten Beispiel durch einen herausnehmbaren Filterkorb 17 gebildet wird. Der Filterkorb 17 wird, wie durch die Pfeile 18 symbolisiert, von dem zu fördernden Medium durchströmt, so dass Schmutzpartikel im Medium in dem Filterkorb 17 zurückgehalten werden, bevor sie die Förderpumpe 10 erreichen können. Der Schmutzfänger 13 weist ferner Reinigungsöffnung 19 auf, die durch einen abnehmbaren Deckel 20 verschlossen ist. Über die Reinigungsöffnung 19 kann der Filterkorb 17 herausgenommen und entleert werden. Damit der Nutzer prüfen kann, ob eine Reinigung des Filterkorbs erforderlich ist, kann der Deckel 20 und/oder das Gehäuse des Schmutzfängers 13 ganz oder teilweise aus einem transparenten Material bestehen.

Im dargestellten Beispiel ist der Schmutzfänger 13 mit dem Pumpengehäuse 11 verbunden. In diesem Fall können das Pumpengehäuse 11 und der das Gehäuse des Schmutzfängers 13 auch als einstückiges Bauteil, beispielsweise als einstückiges Spritzgussteil ausgebildet sein. Alternativ kann der Schmutzfänger 13 auch ein separates Bauelement sein. In diesem Fall kann die Auslassöffnung 15 des Schmutzfängers 13 beispielsweise über eine Rohr- oder Schlauchverbindung an die Saugöffnung 16 der Förderpumpe 10 angeschlossen werden.

Da derartige Förderpumpe häufig an Orten mit unzureichender Beleuchtung installiert werden müssen, kann sich die Kontrolle des Filterkorbs trotz transparentem Deckel und/oder transparentem Gehäuse des Schmutzfängers schwierig gestalten. Die vorliegende Erfindung schlägt daher vor, den Schmutzfänger mit einer beleuchtbaren Filtereinheit auszurüsten, so dass die Filtereinheit unabhängig vom Umgebungslicht optisch kontrolliert werden kann.

In den Figuren 2 und 3 ist eine Variante des Deckels 20 der Figur 1 dargestellt, mit dem eine beleuchtbare Filtereinheit realisiert werden kann.

Figur 2 zeigt ein Ausführungsbeispiel des Deckels 20 aus transparentem Kunststoff im Querschnitt. In dem Deckel 20 ist eine Vertiefung 21 vorgesehen, in die ein Beleuchtungseinsatz eingebaut werden kann.

Ein Deckel 20 mit eingebautem Beleuchtungseinsatz 22 ist in Figur 3 dargestellt. Der Beleuchtungseinsatz 22 umfasst mehrere Leuchtdioden 23, die von Knopfbatterien 24 mit elektrischer Energie versorgt werden. Durch Betätigen des Druckknopfes 25 können die Leuchtdioden 23 eingeschaltet werden. Eine Halteplatte 26, die über eine Schraube 27 lösbar mit dem Deckel 20 verbunden ist, fixiert die Elemente des Beleuchtungseinsatzes 22 in der Vertiefung 21 des Deckels 20. Nach Lösen der Schraube 27 kann die Halteplatte 26 abgenommen und der Beleuchtungseinsatz 22 zum Wechseln der Batterien 24 oder zum Austausch defekter Leuchtdioden 23 aus der Vertiefung 21 herausgenommen werden. Für eine verbesserte Abdichtung des Beleuchtungseinsatzes 22, kann außerdem eine Gummidichtung 28 vorgesehen werden, die zumindest der Druckknopf 25 oder auch (wie dargestellt) die gesamte Halteplatte 26 überspannt und verhindert, dass Spritzwasser an die elektrische Bauelemente des Beleuchtungseinsatzes gelangen kann.

## Patentansprüche

1. Schmutzfänger für eine Förderpumpe, wobei eine Filtereinheit in einem wenigstens teilweise transparenten Gehäuse mit jeweils mindestens einer Einlass- und Auslassöffnung angeordnet ist und die Auslassöffnung mit der Ansaugöffnung der Förderpumpe verbindbar ist,
**gekennzeichnet dadurch, dass**
der Schmutzfänger wenigstens eine Beleuchtungseinrichtung aufweist, die so angeordnet ist, dass die Filtereinheit beleuchtbar ist.

2. Schmutzfänger nach Anspruch 1,
**dadurch gekennzeichnet, dass**
das Gehäuse einen wenigstens teilweise transparenten Deckel aufweist.

3. Schmutzfänger nach Anspruch 2,
**dadurch gekennzeichnet, dass**
zumindest ein Beleuchtungselement der Beleuchtungseinrichtung am Deckel angeordnet ist.

4. Schmutzfänger nach einem der vorhergehenden Ansprüche,
**dadurch gekennzeichnet, dass**
zumindest ein Beleuchtungselement der Beleuchtungseinrichtung an einer Seitenwand des Gehäuses angeordnet ist.

5. Schmutzfänger nach einem der vorhergehenden Ansprüche,
**dadurch gekennzeichnet, dass**
die Filtereinheit aus dem Gehäuse des Schmutzfängers herausnehmbar ist.

6. Schmutzfänger nach einem der vorhergehenden Ansprüche,
**dadurch gekennzeichnet, dass**
die Beleuchtungseinrichtung von einem eigenen Energiespeicher, insbesondere einer Batterie, gespeist wird.

7. Schmutzfänger nach einem der Ansprüche 1 bis 5,
**dadurch gekennzeichnet, dass**
die Beleuchtungseinrichtung von einer Energieversorgungseinheit der Förderpumpe gespeist wird.

8. Schmutzfänger nach einem der vorhergehenden Ansprüche,
**dadurch gekennzeichnet, dass**
die Beleuchtungseinrichtung vom Benutzer steuerbar ist.

9. Schmutzfänger nach Anspruch 8,
**dadurch gekennzeichnet, dass**
die Beleuchtungseinrichtung durch einen Druckknopf geschaltet werden kann.

10. Förderpumpe, insbesondere Umwälzpumpe für Swimmingpools oder Schwimmbäder,
**dadurch gekennzeichnet, dass**
die Förderpumpe einen Schmutzfänger nach einem der vorhergehenden Ansprüche umfasst, wobei die Auslassöffnung des Schmutzfängers mit der Ansaugöffnung der Förderpumpe verbunden ist.

11. Förderpumpe nach Anspruch 10,
**dadurch gekennzeichnet, dass**
die Auslassöffnung des Schmutzfängers unmittelbar an der Ansaugöffnung der Förderpumpe angeordnet ist.

12. Förderpumpe nach Anspruch 10 oder 11,
**dadurch gekennzeichnet, dass**
der Schmutzfänger in das Gehäuse der Förderpumpe integriert ist.
